# DEMANDE DE BREVET EUROPEEN

(11) **EP 1 168 776 A1**
(43) Date de publication de la demande: **02.01.2002**
(21) Numéro de dépôt: 01401393.2
(22) Date de dépôt: 29.05.2001
(51) Int. Cl.: H04M 1/02

(54) **Connecteur pour module de telephone portable**

(30) Priorité: 02.06.2000 FR 0007105
(71) Demandeur: SAGEM S.A., 75116 Paris (FR)
(72) Inventeur: Chambon, François, 95800 Cergy Saint-Christophe (FR)
(74) Mandataire: Callon de Lamarck, Jean-Robert

(57) **Abrégé**

Ensemble comportant un téléphone portable (2), un module (1) qui est apte à être reçu dans un logement du boîtier du téléphone portable (2) et qui comporte une électronique (5) apte à communiquer et/ou alimenter une électronique (7) du téléphone portable (2), un connecteur (3) apte à relier l'électronique du module (1) et celle du téléphone portable (2), caractérisé en ce que le connecteur (3) est un dispositif indépendant du téléphone portable (2), le boîtier du téléphone portable (2) comportant un logement apte à recevoir ledit connecteur.

## Description

La présente invention est relative à un connecteur pour module de téléphone portable, et notamment mais non limitativement pour pack de batterie.

Il est connu d'intégrer dans un module de batterie de téléphone portable - module également appelé "pack batterie" selon la terminologie usuelle de l'homme du métier - un ou plusieurs circuits électroniques qui sont dédiés à des fonctions particulières (radio FM, module DECT, lecteur de cartes à puces...) et qui sont aptes à communiquer avec des circuits du téléphone portable qui reçoit le module de batterie ou à lui transmettre de la puissance.

Habituellement, il est prévu sur le téléphone portable un connecteur apte à relier l'électronique du pack de batterie et l'électronique du téléphone portable.

Un tel connecteur est généralement intégré au téléphone portable, ses pattes de connexion étant soudées à des pistes ou à des plots de contact d'une carte à circuit imprimé du téléphone portable.

Il est souhaitable - de façon à offrir autant de choix que possible aux utilisateurs - qu'un téléphone portable susceptible d'être utilisé avec un pack de batterie du type précité, c'est à dire intégrant une électronique apte à communiquer avec une électronique complémentaire du téléphone portable, puisse également être utilisé avec un pack de batterie classique, pour le cas où un utilisateur ne souhaiterait pas avoir accès aux fonctions associées à cette électronique.

Mais ceci pose un problème de coût, les connecteurs, qui sont par exemple des connecteurs de type à pistons, étant relativement onéreux.

L'invention propose une solution qui permet de résoudre ce problème et qui permet de ne mettre en place le connecteur que lorsque l'utilisateur s'équipe d'un pack de batterie destiné à communiquer avec des circuits du téléphone portable.

L'invention propose à cet effet un ensemble comportant un téléphone portable, un module qui est apte à être reçu dans un logement du boîtier du téléphone portable et qui comporte une électronique apte à communiquer et/ou alimenter une électronique du téléphone portable, un connecteur, indépendant du téléphone portable et du module, apte à relier l'électronique du module et celle du téléphone portable, caractérisé en ce que le boîtier du téléphone portable et le boîtier du module comportent tous les deux un logement apte à recevoir ledit connecteur, les deux logements étant ménagés sur les parois du téléphone portable et du module, de façon à être en regard l'un de l'autre lorsque le module est en place sur le téléphone portable, le connecteur s'étendant à l'intérieur du boîtier du téléphone portable et du module lorsqu'il est en place et que ledit boîtier et ledit module sont rapportés l'un sur l'autre.

Un tel ensemble est avantageusement complété par les différentes caractéristiques suivantes prises seules ou selon toutes leurs combinaisons possibles :
- le connecteur et/ou le boîtier du téléphone portable comportent des moyens de verrouillage aptes à empêcher le connecteur de sortir du logement du boîtier du téléphone portable une fois qu'il est mis en place sur celui-ci ;
- les moyens de verrouillage comportent un ou plusieurs éléments qui s'étendent en saillie par rapport au corps du connecteur et qui, lorsque le connecteur est en place dans son logement sur le téléphone portable, sont destinés à venir en appui contre la paroi du boîtier du téléphone ;
- le boîtier et/ou un élément de verrouillage est apte à s'effacer élastiquement par contact entre le bord du boîtier et l'élément de verrouillage lors de la mise en place du connecteur dans son logement ;
- le connecteur comporte des contacts qui sont en saillie à chacune de ces extrémités et qui sont aptes à venir élastiquement en appui sur des éléments conducteurs complémentaires de l'électronique du module et de l'électronique du téléphone portable ;
- le connecteur est du type à pistons ;
- le connecteur est du type à lamelles élastiques ;
- le ou les éléments de verrouillage s'étendent en saillie au voisinage d'une extrémité du connecteur ;
- l'électronique du boîtier du téléphone portable et l'électronique du module comportent chacune une carte à circuit imprimé et en ce que le connecteur est apte à s'étendre entre des zones de contact sur l'une et l'autre des deux cartes.

L'invention concerne également un connecteur de module de téléphone portable et notamment de pack de batterie, caractérisé en ce qu'il est constitué par un connecteur indépendant du téléphone portable. Elle concerne en outre un ensemble qui comporte un pack de batterie et un connecteur selon la revendication précédente.

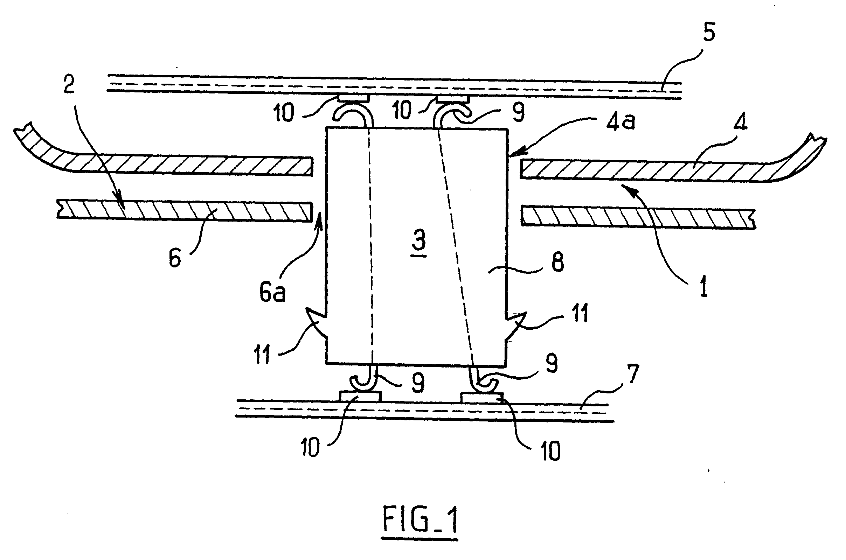

D'autres caractéristiques et avantages de l'invention ressortiront encore de la description qui suit, laquelle est purement illustrative et non limitative et doit être lue en regard de la figure unique annexée, laquelle est une vue en coupe illustrant schématiquement la disposition relative d'un connecteur 3 conforme à un mode de réalisation possible de l'invention et des zones d'un module 1, en l'occurrence un pack de batterie, et d'un téléphone portable 2 dans lesquelles ce connecteur 3 est reçu.

Le pack de batterie 1 comporte, dans un boîtier 4, une carte à circuit imprimé 5, ainsi que des moyens de stockage d'énergie électrique (non représentés).

Le boîtier du téléphone portable 2 a été référencé par 6. Le téléphone portable 2 comporte, au droit de la zone où ledit boîtier 6 reçoit le pack de batterie 1, une carte à circuit imprimé 7 qui est destinée à être reliée à la carte 5 par l'intermédiaire du connecteur 3.

Le connecteur 3 comporte un boîtier 8, ainsi que des contacts 9 - qui sont par exemple des pistons montés sur des ressorts ou encore des portions de lamelles élastiques s'étendant à travers le boîtier 8. Ces contacts 9 sont répartis d'un côté et de l'autre du boîtier 8 et sont aptes à venir élastiquement en appui sur des pistes 10 de cuivre portées par la carte 5 et la carte 7.

Le boîtier 4 du pack de batterie 1 et le boîtier 6 du téléphone portable 2 présentent chacun, au droit respectivement de la carte 5 et de la carte 7, un orifice 4a, 6a, destiné à être traversé par le connecteur 3 lorsqu'il est en place entre le pack de batterie 1 et le téléphone portable 2.

Ces deux orifices 4a, 6a sont sensiblement de même dimensions et sont ménagés sur les parois du boîtier 4 et du boîtier 6, de façon à être en regard l'un de l'autre lorsque le pack de batterie 1 est en place sur le téléphone portable 2.

Comme on l'aura compris, le connecteur 3 est initialement indépendant du téléphone portable 2. Il n'est pas monté initialement sur le boîtier 6 du téléphone portable 2, qui coopère alors avec un pack de batterie classique.

Le connecteur 3 n'est mis en place sur le boîtier 6 du téléphone portable 2 que si l'utilisateur décide d'utiliser un pack de batterie intégrant une électronique apte à communiquer avec une électronique complémentaire du téléphone portable 2, c'est à dire un pack de batterie du type du pack 1.

Le connecteur 3 est par exemple vendu avec le pack de batterie 1.

Ces contacts 9 peuvent être soudés aux pistes de cuivre 10 du pack de batterie 1. Cette solution est néanmoins fragile. C'est pourquoi, dans une variante préférée, le connecteur 3 est également indépendant du pack de batterie 1.

Par ailleurs, le boîtier 8 du connecteur 3 comporte un ou plusieurs éléments de verrouillage 11 qui font saillie par rapport au corps dudit boîtier 8 et qui sont aptes à exercer un effort élastique contre les bords de l'orifice 6a lorsqu'ils sont introduits avec le connecteur 3 dans le boîtier 6 et à empêcher le connecteur 3 de sortir dudit orifice 6a une fois qu'il y a été introduit.

Le ou les éléments 11 de verrouillage sont par exemple constitués par une jupe conique ou des ergots ou lames élastiques d'une pièce avec le boîtier 8 ou tout autre élément apte à s'effacer élastiquement lorsque le connecteur 3 est introduit dans son logement à travers l'orifice 6a du boîtier 6. Ils sont avantageusement disposés au voisinage de l'extrémité du connecteur 3 par laquelle celui-ci est en contact avec la carte 7 du téléphone portable 2. En variante, c'est le boîtier 8 qui peut être élastique et s'effacer élastiquement.

De cette façon, l'effort qui assure le verrouillage du connecteur 3 et qui est exercé entre la paroi du boîtier 6 et le ou les éléments 11 est un effort limité, les contacts 9 étant sensiblement dans leur position de repos lorsque le ou les éléments 11 sont en appui contre cette paroi.

L'invention a été ici décrite dans le cas où le module 1 est un pack de batterie.

## Revendications

1. Ensemble comportant un téléphone portable (2), un module (1) qui est apte à être reçu dans un logement du boîtier du téléphone portable (2) et qui comporte une électronique (5) apte à communiquer et/ou alimenter une électronique (7) du téléphone portable (2), un connecteur (3), indépendant du téléphone portable (2) et du module (1), apte à relier l'électronique du module (1) et celle du téléphone portable (2), **caractérisé en ce que** le boîtier du téléphone portable (2) et le boîtier du module (1) comportent tous les deux un logement apte à recevoir ledit connecteur, les deux logements étant ménagés sur les parois du téléphone portable (2) et du module (1), de façon à être en regard l'un de l'autre lorsque le module (1) est en place sur le téléphone portable (2), le connecteur (3) s'étendant à l'intérieur du boîtier du téléphone portable et du module lorsqu'il est en place et que ledit boîtier et ledit module sont rapportés l'un sur l'autre.

2. Ensemble selon la revendication 1, **caractérisé en ce que** le connecteur et/ou le boîtier du téléphone portable (2) comportent des moyens de verrouillage (11) aptes à empêcher le connecteur (3) de sortir du logement du boîtier du téléphone portable (2) une fois qu'il est mis en place sur celui-ci.

3. Ensemble selon la revendication 2, **caractérisé en ce que** les moyens de verrouillage (11) comportent un ou plusieurs éléments qui s'étendent en saillie par rapport au corps du connecteur et qui, lorsque le connecteur (3) est en place dans son logement sur le téléphone portable (2), sont destinés à venir en appui contre la paroi du boîtier du téléphone .

4. Ensemble selon la revendication 2, **caractérisé en ce que** le boîtier et/ou un élément de verrouillage (11) est apte à s'effacer élastiquement par contact entre le bord du boîtier et l'élément de verrouillage lors de la mise en place du connecteur dans son logement.

5. Ensemble selon l'une des revendications précédentes, **caractérisé en ce que** le connecteur (3) comporte des contacts (9) qui sont en saillie à chacune de ces extrémités et qui sont aptes à venir élastiquement en appui sur des éléments conducteurs complémentaires de l'électronique du module (1) et de l'électronique du téléphone portable (2).

6. Ensemble selon la revendication 5, **caractérisé en ce que** le connecteur (3) est du type à pistons et/ou du type à lamelles élastiques.

7. Ensemble selon les revendications 3 et 5 prises en combinaison, **caractérisé en ce que** le ou les éléments de verrouillage (11) s'étendent en saillie au voisinage d'une extrémité du connecteur (3).

8. Ensemble selon l'une des revendications précédentes, **caractérisé en ce que** l'électronique du boîtier du téléphone portable (2) et l'électronique du module (1) comportent chacune une carte à circuit imprimé et **en ce que** le connecteur est apte à s'étendre entre des zones de contact sur l'une et l'autre des deux cartes.

9. Connecteur de module de téléphone portable (2) et notamment de pack de batterie, **caractérisé en ce qu'**il est constitué par un connecteur indépendant du téléphone portable (2).

10. Ensemble **caractérisé en ce qu'**il comporte un pack (1) de batterie et un connecteur selon la revendication précédente.
